(19) Europäisches Patentamt
European Patent Office
Office européen des brevets

(11) **EP 0 546 356 B1**

(12) **EUROPÄISCHE PATENTSCHRIFT**

(45) Veröffentlichungstag und Bekanntmachung des Hinweises auf die Patenterteilung:
**22.05.1996 Patentblatt 1996/21**

(51) Int Cl.[6]: **C08L 25/02**, C08L 23/02
// (C08L25/02, 23:02, 53:00),
(C08L25/02, 25:06, 53:00)

(21) Anmeldenummer: **92119695.2**

(22) Anmeldetag: **19.11.1992**

(54) **Thermoplastische Formmasse**

Thermoplastic moulding mass

Masse de moulage thermoplastique

(84) Benannte Vertragsstaaten:
**BE DE ES FR GB IT NL**

(30) Priorität: **30.11.1991 DE 4139627**

(43) Veröffentlichungstag der Anmeldung:
**16.06.1993 Patentblatt 1993/24**

(73) Patentinhaber: **BASF Aktiengesellschaft**
**D-67063 Ludwigshafen (DE)**

(72) Erfinder:
• **Seelert, Stefan, Dr.**
**W-6710 Frankenthal (DE)**

• **Klaerner, Peter, Dr.**
**W-6719 Battenberg (DE)**
• **Jung, Andreas, Dr.**
**W-6800 Mannheim 1 (DE)**
• **Hoenl, Hans, Dr.**
**W-6719 Obersuelzen (DE)**
• **Ostermayer, Bertram, Dr.**
**W-6701 Roedersheim-Gronau (DE)**

(56) Entgegenhaltungen:
**EP-A- 0 310 051       EP-A- 0 493 710**
**WO-A-90/05759**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Polystyrol ist ein Werkstoff, der sich durch gute Verarbeitbarkeit auszeichnet, der aber sehr spröde ist. Zur Zähmodifizierung von Polystyrol ist es üblich, die radikalische Polymerisation des Styrols in Gegenwart eines Polybutadien-Kautschuks durchzuführen. Es werden dann sogenannte schlagfest modifizierte Polystyrole erhalten. Eine andere Möglichkeit besteht darin, das Polystyrol mit Butadien-Styrol-Blockcopolymeren abzumischen. Die nach diesen Verfahren hergestellten thermoplastischen Formmassen enthalten aber noch aus dem Butadien stammende Doppelbindungen, die bei UV-Bestrahlung oder bei erhöhten Temperaturen zu einer Gelbfärbung des Materials und zu Versprödung führen.

Man kann schlagzähmodifiziertes Polystyrol auch durch Polymerisation des Styrols in Gegenwart eines sogenannten EPDM-Kautschuks, d.h. eines Ethylen-Propylen-Dien-Terpolymeren herstellen. Die Schwierigkeit besteht hierbei darin, daß EPDM-Kautschuke in der Regel keine ausreichend große Zahl an möglichen Reaktionsstellen aufweisen, an denen ein Aufpfropfen des Styrols auf dem EPDM-Kautschuk erfolgen kann. Dies hat zur Folge, daß die entstehenden Kautschuk-Teilchen groß sind (10 - 20 μm), was eine matte Oberfläche bewirkt, und daß infolge der ungenügenden Anbindung der Kautschukphase an die umgebende Polystyrol-Matrix die mechanischen Eigenschaften dieser Produkte nicht befriedigen.

Eine andere Möglichkeit, doppelbindungsfreie zähe Polystyrol-Formmassen herzustellen, besteht darin, Polystyrole und hydrierte Styrol-Butadien-Blockcopolymere zu mischen. Um mit dieser Methode ausreichende Zähigkeit zu erzielen, sind allerdings sehr große Mengen an hydrierten Styrol-Butadien-Blockcopolymeren erforderlich. Infolgedessen ergeben sich Delaminierungsprobleme bei der Herstellung von Formteilen. Außerdem ist die Methode wegen der hohen Preise der hydrierten Styrol-Butadien-Blockcopolymere wirtschaftlich nicht interessant.

Ein Weg, die erwähnten Schwierigkeiten zu umgehen, besteht darin, Mischungen aus Styrol und/oder substituiertes Styrol enthaltende Polymerisaten und Polyolefinen herzustellen; solche Mischungen lassen sich als witterungsbeständige Formmassen einsetzen. Polystyrole und Polyolefine sind Polymere, die molekular nicht miteinander mischbar sind. Wenn solche Mischungen mit brauchbaren Eigenschaften hergestellt werden sollen, müssen deshalb weitere Polymere zugegeben werden, die als Verträglichkeitsvermittler wirken. Für diesen Zweck werden insbesondere Styrol-Butadien-Blockcopolymere oder selektiv hydrierte Styrol-Butadien-Blockcopolymere beschrieben:

Styrol-Butadien-Styrol-Dreiblockcopolymere empfiehlt z.B. die EP-A-42 153. Sternförmige, aus Butadien und Styrol aufgebaute Blockcopolymerisate werden in EP-A-125 227, EP-A-310 051 und US 4 495 323 angegeben. Diese Verträglichkeitsvermittler enthalten aber in ihren Polybutadienblöcken noch aus dem Butadien stammende Doppelbindungen, und die Formmassen sind deshalb nicht ausreichend witterungsbeständig.

In der DE-A-2 003 916 werden Blockcopolymerisate des Typs X-Y und X-Y-X genannt, wobei X ein Vinylaromat und Y ein Dienkohlenwasserstoff ist, und das Copolymerisat gegebenenfalls ganz oder teilweise hydriert sein kann. Hydrierte Styrol-Butadien-Styrol-Dreiblockcopolymere werden auch in EP-A-4685 und EP-A-250 970 als Verträglichkeitsvermittler eingesetzt. In DE-A-2 839 357 werden Mischungen aus Homopolystyrol und einer vorgemischten Zusammensetzung aus einem Polyolefin und einem selektiv hydrierten linearen oder radialen Blockcopolymeren beschrieben, das aus vinylaromatischen und olefinischen Einheiten aufgebaut ist.

Es hat sich nun gezeigt, daß die bekannten Blockcopolymeren zwar ausreichend zähe Formmassen ermöglichen, die Steifigkeit der Formmassen aber besonders in Zusammensetzungen mit höheren Polyolefingehalten in den meisten Fällen noch nicht ausreicht.

Erfindungsgemäß wird die Aufgabe, derartige Formmassen auf Basis einer Mischung eines aus Styrol und/oder substituiertem Styrol aufgebauten Homopolymerisats und eines Polyolefins mit guter Zähigkeit und Steifigkeit herzustellen, gelöst, wenn als Verträglichkeitsvermittler ein selektiv hydriertes sternförmiges Sternblockcopolymerisat mit mindestens 50 Gew.-% Styrol eingesetzt wird.

Unmittelbarer Erfindungsgegenstand ist daher eine thermoplastische Formmasse, enthaltend, jeweils bezogen auf die Summe aus A, B und C,

A:  10 bis 90 Gew.-% eines aus Styrol und/oder substituiertem Styrol aufgebauten Homopolymerisats A,

B:  10 bis 90 Gew.-% Polyolefin B und

C:  5 bis 40 Gew.-% eines durch anionische Polymerisation aus Styrol und Butadien und/oder Isopren, Kupplung und anschließende selektive Hydrierung hergestellten Sternblockcopolymerisats C mit mindestens 50 Gew.-% Styrol.

Als Styrolhomopolymer A kommen sowohl Homopolymerisate von Styrol als auch soldieren substituierten Styrolen in Betracht. Substituierte Styrole sind vorzugsweise methylsubstituierte Styrole, in denen ein Methylrest als Substituent am aromatischen Ring oder an der Seitenkette vorhanden ist. Hier sind vor allem p-Methylstyrol und α-Methylstyrol zu nennen. Besonders bevorzugt ist Homopolystyrol.

Homopolymerisate des Styrols können in bekannter Weise in Masse, Lösung oder Suspension hergestellt werden. Die Polymerisation kann nach den bekannten Mechanismen der radikalischen oder anionischen Polymerisation erfolgen. Verfahren zur Herstellung von Styrolpolymerisaten sind bekannt und werden z.B. in "Ullmanns Encyklopädie der technischen Chemie", 4. Auflage, Band 19, Seiten 265 bis 273, Verlag Chemie, Weinheim, beschrieben.

Polystyrole und substituierte Polystyrole sind im Handel erhältlich. Die Viskositätszahl der Polymerisate A soll zwischen 50 und 130 ml/g (gemessen in 0,5 %iger Lösung in Toluol bei 23°C) liegen.

Der Anteil des Polymeren A in der erfindungsgemäßen Formmasse beträgt bevorzugt 30 bis 70 Gew.-%.

Als Polyolefin B der Mischungen kommen Homo- oder Copolymerisate des Propylens und des Ethylens in Frage. Genannt sei hier Polypropylen, das z.B. nach dem sogenannten Gasphasenverfahren unter Verwendung von Ziegler-Natta-Katalysatoren hergestellt werden kann und einen Schmelzfließindex (MFI 190/5) von 0,1 bis 90 g/10 min aufweist. In Frage kommen auch Polyethylen vom LLDPE-, LDPE- oder HDPE-Typ, hergestellt nach dem Hoch-, Mittel- oder Niederdruckverfahren mit Dichten zwischen 0,91 und 0,97 g/cm$^3$, oder Copolymerisate von Ethylen, z.B. mit Vinylester wie Vinylacetat oder Vinylpropionat, mit Acrylestern oder mit Propylen. Der Comonomerengehalt der Ethylencopolymerisate liegt zwischen 1 und 65 Gew.-%, vorzugsweise zwischen 10 und 45 Gew.%. Der Schmelzfließindex der Ethylenpolymerisate kann in einem weiten Bereich schwanken und beträgt vorzugsweise 0,5 bis 40 g/10 min (MFI 190/2,16). Ein bevorzugtes Polyolefin ist Polyethylen hoher Dichte (HDPE; Bereich 0,94 bis 0,97 g/cm$^3$), hergestellt nach dem sogenannten Phillips-Verfahren (Mitteldruckverfahren). Ein anderes bevorzugtes Polyolefin ist lineares Polyethylen niedriger Dichte (LDPE; Bereich 0,91 bis 0,94 g/cm$^3$), hergestellt nach dem Gasphasenverfahren.

Der Gehalt an Polyolefin B in der erfindungsgemäßen Formmasse soll bevorzugt 30 bis 70 Gew.-% betragen.

Sternblockcopolymer C ist ein durch anionische Polymerisation unter Kupplung aus Styrol und Butadien erzeugtes Sternblockcopolymerisat, das selektiv hydriert worden ist. Die Herstellung sternförmig verzweigter Blockcopolymerisate, die aus Styrol und Butadien aufgebaut sind, ist an sich bekannt. Ein (Teil)Ersatz von Butadien durch Isopren ist möglich. Geeignete Blockcopolymerisate C sind z.B. hydrierte Sternblockcopolymerisate aus aus 60 bis 90 Gew.-% Styrol und 40-10 Gew.% Butadien aufgebante Polymerisate, die eine mittlere Sternastzahl von 3 bis 12 aufweisen und ein mittleres Molekulargewicht $\overline{M}_w$ (Gewichtsmittel; GPC) von 100 000 bis 300 000 besitzen.

Verzweigte Sternblockcopolymerisate und deren Herstellung sind z.B. in US-PS 3 281 383 bzw. GB-PS 985 614 beschrieben. Polymodal aufgebaute verzweigte Blockcopolymerisate sind aus der DE-OS 19 59 922 bekannt. Schließlich sind andersartige, verzweigte Blockcopolymerisate in der DE-OS 25 50 227 beschrieben. Die Kopplungsreaktion zur Herstellung verzweigter Blockcopolymerisate verläuft nicht quantitativ, so daß die verzweigten Blockcopolymerisate aus komplexen Mischungen linearer und verzweigter Blockcopolymerisate bestehen können. Im Sinne der vorliegenden Erfindung sollen jedoch die Umsetzungsprodukte der Kopplung inklusive der ungekoppelten Anteile als verwzeigte Blockcopolymerisate verstanden werden. Bevorzugt werden verzweigte Blockcopolymerisate angewendet, die nach der Lehre der DE-OS 19 59 922 und insbesondere nach der Lehre der DE-OS 25 50 227) (mit verschmierten Übergängen zwischen den Blöcken) hergestellt worden sind und ein mittleres GPC bestimmtes Molekulargewicht $\overline{M}_w$ (Gewichtsmittel) von 100 000 bis 300 000 bei einer Sternastzahl von 3 bis 5 aufweisen.

Erfindungsgemäß werden verzweigte Sternblockcopolymerisate verwendet, die in an sich bekannter Weise selektiv hydriert sind, wobei lediglich die von den Monomerenbausteinen Butadien und/oder Isopren herrührenden Doppelbindungen, nicht aber der Styrol-Anteil, gesättigt werden. Derartige Verfahren sind bekannt und können z.B. nach dem in DE-OS 27 48 884 beschriebenen Verfahren durchgeführt werden. Die ursprünglich vorhandenen Doppelbindungen sollen für die Zwecke der Erfindung zu mehr als 50 %, bevorzugt zu mehr als 80 %, besonders bevorzugt zu mehr als 90 % und insbesondere zu mehr als 97 % abgesättigt sein.

Bei der Polymerisation von C ist es auch möglich, anstelle von Styrol ein Gemisch aus Styrol und substituierten Styrolen einzusetzen. Als substituierte Styrole kommen vorzugsweise methylsubstituierte Styrole und insbesondere p-Methylstyrol oder α-Methylstyrol in Frage.

In der erfindungsgemäßen Formmasse soll C zu 5 bis 40, vorzugsweise zu 8 bis 25 und insbesondere zu 10 bis 20 Gew.-% enthalten sein.

Die erfindungsgemäße Formmasse kann zur weiteren Verbesserung der Eigenschaften z.B. 0,05 bis 50 gewichtsteile, bezogen auf 100 gewichtsteile des Masse aus A, B und C an Zusatzstoffen D enthalten, die für A, B und/oder C üblich und gebräuchlich sind. Bei diesen Zusatzstoffen handelt es sich z.B. um Hitze- oder Lichtstabilisatoren, Gleit- oder Entformungsmittel, Schmiermittel, Antistatika, Färbemittel wie Farbstoffe oder Pigmente, Flammschutzmittel oder Verstärkungsmaterialien.

Die Herstellung der Formmassen erfolgt durch Mischen von A, B, C und gegebenenfalls D nach allen bekannten Methoden. Vorzugsweise geschieht das Vermischen der Komponenten bei höheren Temperaturen, z.B. in der Schmelze, durch gemeinsames Verwalzen, Kneten oder Extrudieren in einem Ein- oder Zweischneckenextruder. Die Zusatzstoffe können bei der Vermischung der Bestandteile A, B und C zugegeben werden, sie können aber auch schon in A, B oder C enthalten gewesen sein.

Die zur Charakterisierung der Mischungen verwendeten Parameter wurden wie folgt bestimmt:

Streckspannung und Reißdehnung nach DIN 53 455
Zug-Elastizitätsmodul nach DIN 53 457

Multiaxiale Zähigkeit als Durchstoßarbeit (Gesamtarbeit $W_{ges}$)
nach DIN 53 443
Yellowness-Index nach ASTM D 1925

Beispiele

Für die Herstellung der erfindungsgemäßen Formmassen und der Vergleichsmassen wurden folgende Bestandteile verwendet:

Komponente A:

A:     Polystyrol 158 K; BASF-Produkt

Komponente B:

B:     LLDPE:Lupolen L 3020 GN der BASF (Dichte 0,930 g/cm$^3$ nach DIN 53 479; MFI (190/2, 16) zwischen 0,9 und 1,2 g/10 Min nach DIN 53 735).

Komponente C:

C1:    Polymodal aufgebaues Sternblockcopolymer mit ca. 75 Gew.-% Styrol und 25 Gew.-% Butadien nach den Angaben der DE-OS 25 50 227, dessen Doppelbindungen nach dem in DE-OS 20 13 263 beschriebenen Verfahren selektiv zu 99 % hydriert worden waren.

C2:    Polymodal aufgebautes Sternblockcopolymer, dessen Doppelbindungen nach dem in DE-OS 20 13 263 beschriebenen Verfahren selektiv zu 99 % hydriert sind mit ca. 40 Gew.-% Styrol und 60 Gew.-% Butadien.

C3:    Hydriertes SBS-Dreiblockcopolymerisat mit ca. 30 Gew.-% Styrol (Kraton G 1650 der Shell AG); zu Vergleichszwekken

C4:    Polymodal aufgebautes Sternblockcopolymer, nicht hydriertes, mit ca. 75 Gew.-% Styrol und 25 Gew.-% Butadien, hergestellt nach DE-OS 25 50 227; ebenfalls zu Vergleichszwecken.

Die Bestandteile wurden auf einem Zweischneckenkneter ZSK 30 der Fa. Werner & Pfleiderer bei 200°C mit einem Durchsatz von 10 kg/h gemischt. Zur Ermittlung der Werkstoffeigenschaften wurden bei 200°C Formkörper gepreßt. Die Prüfkörper wurden mit einem Xenotest-Gerät 1200 der Fa. Original Hanau Quarzlampen GmbH mit der in der Tabelle angegebenen Einwirkungsdauer belichtet.

Die in der Tabelle aufgeführten Werte zeigen, daß die erfindungsgemäßen Formmassen gute Zähigkeit und insbesondere eine gute multiaxiale Zähigkeite aufweisen, ohne daß, wie bei den Vergleichsversuchen V4 und V5 zu beobachten ist, die Steifigkeit reduziert wird. Die Vergilbung der erfindungsgemäßen Formmassen der Beispiele 1 und 2 ist geringer als die der Vergleichsversuche V1 bis V5 und deutlich geringer als die der doppelbindungshaltigen Vergleichsversuche V6 und V7, was sich in den geringeren Werten der Yellowness-Indizes äußert.

Die Vorteile der erfindungsgemäßen Formmassen in der Witterungsbeständigkeit gegenüber herkömmlichem schlagfestem Polystyrol zeigen sich in den unter identischen Bedingungen wie in der Tabelle gemessenen Yellowness-Indizes eines schlagfesten Polystyrols mit einem Polybutadiengehalt von 8 %:

Belichtungsdauer 0 h: 5,2
Belichtungsdauer 24 h: 15,7
Belichtungsdauer 48 h: 27,8
Belichtungsdauer 96 h: 44,2

Tabelle

Zusammensetzung und Eigenschaften der erfindungsgemäßen und nicht erfindungsgemäßen Formmassen

| Beispiel<br><br>Vergleichsversuche | | 1 | 2 | V1 | V2 | V3 | V4 | V5 | V6 | V7 |
|---|---|---|---|---|---|---|---|---|---|---|
| A | [Gew.-%] | 45 | 40 | 50 | 45 | 40 | 45 | 40 | 45 | 40 |
| B | [Gew.-%] | 45 | 40 | 50 | 45 | 40 | 45 | 40 | 45 | 40 |
| C1 | [Gew.-%] | 10 | 20 | – | – | – | – | – | – | – |
| C2 | [Gew.-%] | – | – | – | 10 | 20 | – | – | – | – |
| C3 | [Gew.-%] | – | – | – | – | – | 10 | 20 | – | – |
| C4 | [Gew.-%] | – | – | – | – | – | – | – | 10 | 20 |
| Zug-E-Modul | $[N/mm^2]$ | 1139 | 1002 | 915 | 648 | 524 | 515 | 401 | 882 | 974 |
| Streckspannung | $[N/mm^2]$ | 26,9 | 24,7 | 0,0 | 18,9 | 14,0 | 17,3 | 11,5 | 21,8 | 23,4 |
| Reißdehnung | [%] | 11 | 71 | 1 | 13 | 25 | 34 | 79 | 7 | 20 |
| Durchstoßarbeit (Wges) | [Nm] | 21 | 43 | 1 | 11 | 23 | 12 | 36 | 12 | 36 |
| Yellowness Index nach | | | | | | | | | | |
| 0 h Belichtung | | 0,7 | 1,8 | 2,3 | 1,9 | 1,5 | 0,8 | 1,2 | 3,9 | 2,5 |
| 24 h Belichtung | | 6,6 | 6,2 | 9,1 | 8,6 | 7,9 | 7,7 | 6,8 | 12,8 | 12,6 |
| 48 h Belichtung | | 17,3 | 17,6 | 20,0 | 22,4 | 21,8 | 21,6 | 21,1 | 24,4 | 23,2 |
| 96 h Belichtung | | 28,3 | 27,4 | 32,2 | 32,7 | 32,0 | 32,0 | 30,0 | 38,7 | 38,1 |

**Patentansprüche**

1. Thermoplastische Formmasse, enthaltend, jeweils bezogen auf die Summe der Bestandteile A, B und C,

   A:    mindestens 10 Gew.-% eines aus Styrol und/oder Substituiertem Styrol aufgebauten Homopolymerisats A,

   B:    mindestens 10 Gew.-% Polyolefin B und

   C:    5 bis 40 Gew.-% eines durch anionische Polymerisation aus Styrol und Butadien und/oder Isopren, Kupplung und anschließende selektive Hydrierung hergestellten Sternblockcopolymerisats C mit mindestens 50 Gew.-% Styrol.

2. Formmasse nach Anspruch 1, enthaltend als Sternblockcopolymerisat C ein Sternblockcopolymerisat aus 60 bis 90 Gew.-% Styrol und 40 bis 10 Gew.-% Butadien, das eine mittlere Sternastzahl von 3 bis 12 aufweist und ein mittleres Molekulargewicht $\overline{M}_w$ (Gewichtsmittel; GPC) von 100 000 bis 300 000 besitzt.

3. Formmasse nach Anspruch 1, enthaltend als Polyolefin B Polyethylen.

4. Formmasse nach Anspruch 1, enthaltend als Polyolefin B Polyethylen hoher Dichte (HDPE).

5. Formmasse nach Anspruch 1, enthaltend als Polyolefin B Polyethylen niedriger Dichte (LDPE).

6. Formmasse nach Anspruch 1, enthaltend als Polyolefin B lineares Polyethylen niedriger Dichte (LLDPE).

7. Formmasse nach Anspruch 1, enthaltend als Polyolefin B Polypropylen.

8. Formmasse nach Anspruch 1, enthaltend ein Sternblockcopolymerisat C mit einem Hydrierungsgrad von mehr als 80 %.

9. Formmasse nach Anspruch 1, enthaltend jeweils 30 bis 70 Gew.-% A und B.

10. Formmasse nach Anspruch 1, enthaltend, bezogen auf 100 Teile A + B + C, 0,05 bis 50 Gew.-Teile übliche Zusatzstoffe (Komponente D).

11. Verwendung der Formmasse nach Anspruch 1 zur Herstellung von Formteilen.


**Claims**

1. A thermoplastic molding material containing, based in each case on the sum of components A, B and C,

   A:    not less than 10% by weight of a homopolymer A composed of styrene and/or substituted styrene,
   B:    not less than 10% by weight of a polyolefin B and
   C:    from 5 to 40% by weight of a star block copolymer C containing not less than 50% by weight of styrene and prepared by anionic polymerization of styrene and butadiene and/or isoprene, coupling and subsequent selective hydrogenation.

2. A molding material as claimed in claim 1, containing, as star block copolymer C, a star block copolymer of from 60 to 90% by weight of styrene and from 40 to 10% by weight of butadiene and having an average number of star branches of from 3 to 12 and a weight average molecular weight $\overline{M}_w$ (GPC) of from 100,000 to 300,000.

3. A molding material as claimed in claim 1, containing polyethylene as polyolefin B.

4. A molding material as claimed in claim 1, containing high density polyethylene (HDPE) as polyolefin B.

5. A molding material as claimed in claim 1, containing low density polyethylene (LDPE) as polyolefin B.

6. A molding material as claimed in claim 1, containing linear low density polyethylene (LLDPE) as polyolefin B.

7. A molding material as claimed in claim 1, containing polypropylene as polyolefin B.

8. A molding material as claimed in claim 1, containing a star block copolymer C having a degree of hydrogenation of more than 80%.

9. A molding material as claimed in claim 1, containing from 30 to 70% by weight each of A and B.

10. A molding material as claimed in claim 1, containing from 0.05 to 50 parts by weight of conventional additives (component D) per 100 parts by weight of A + B + C.

11. Use of a molding material as claimed in claim 1 for the production of moldings.

**Revendications**

1. Masse de moulage thermoplastique, contenant, respectivement par rapport à la somme des constituants A, B et C,

A : au moins 10 % en poids d'un homopolymère A constitué de styrène et/ou de styrène substitué,
B : au moins 10 % en poids d'une polyoléfine B et
C : 5 à 40% en poids d'un copolymère séquencé en forme d'étoile C préparé par polymérisation anionique de styrène et de butadiène et/ou d'isoprène, par couplage et par hydrogénation sélective subséquente, avec au moins 50 % en poids de styrène.

2. Masse de moulage selon la revendication 1, contenant à titre de copolymère séquencé en étoile C un copolymère séquencé en étoile, constitué de 60 à 90 % en poids de styrène et de 40 à 10 % en poids de butadiène, qui présente un nombre de ramifications en étoile moyen de 3 à 12 et une masse moléculaire moyenne $\overline{M}_w$ (moyenne pondérée; GPC) de 100.000 à 300.000.

3. Masse de moulage selon la revendication 1, contenant à titre de polyoléfine B du polyéthylène.

4. Masse de moulage selon la revendication 1, contenant à titre de polyoléfine B du polyéthylène de haute densité (HDPE).

5. Masse de moulage selon la revendication 1, contenant à titre de polyoléfine B du polyéthylène de basse densité (LDPE).

6. Masse de moulage selon la revendication 1, contenant à titre de polyoléfine B du polyéthylène linéaire de basse densité (LLDPE).

7. Masse de moulage selon la revendication 1, contenant à titre de polyoléfine B du polypropylène.

8. Masse de moulage selon la revendication 1, contenant un copolymère séquencé en étoile C avec un degré d'hydrogénation supérieur à 80 %.

9. Masse de moulage selon la revendication 1, contenant respectivement 30 à 70 % en poids de A et de B.

10. Masse de moulage selon la revendication 1, contenant, par rapport à 100 parts de A + B + C, 0,05 à 50 parts en poids d'additifs courants (composant D).

11. Utilisation de la masse de moulage selon la revendication 1, pour la préparation d'objets moulés.